Europäisches Patentamt

European Patent Office

Office européen des brevets

(11) Veröffentlichungsnummer: **0 620 424 A1**

## (12) EUROPÄISCHE PATENTANMELDUNG

(21) Anmeldenummer: **94105680.6**

(22) Anmeldetag: **13.04.94**

(51) Int. Cl.5: **G01K 7/18**

(30) Priorität: **16.04.93 DE 4312394**

(43) Veröffentlichungstag der Anmeldung:
**19.10.94 Patentblatt 94/42**

(84) Benannte Vertragsstaaten:
**DE ES FR GB IT**

(71) Anmelder: **GSF - Forschungszentrum für Umwelt und Gesundheit, GmbH
Neuherberg Postfach 1129
D-85758 Oberschleissheim (DE)**

(72) Erfinder: **Schmidt, Karl-Heinz
Am Gries 17
D-83620 Feldkirchen-Westerham (DE)**

(54) **Verfahren zur Temperaturmessung und Widerstandsthermometer zur Durchführung des Verfahrens.**

(57) Die Erfindung betrifft ein Verfahren zur Temperaturmessung und Widerstandsthermometer zur Durchführung des Verfahrens.

Aufgabe der Erfindung ist es, ein Verfahren und eine Vorrichtung zur Verfügung zu stellen, bei dem die mechanischen Einflüsse auf den Meßwiderstand kompensiert werden können. Diese Aufgabe wird dadurch gelöst, daß das Widerstandsthermometer aus mindestens zwei verschiedenen Matrialien mit unterschiedlichen Temperaturkoeffizienten besteht.

EP 0 620 424 A1

Die Erfindung betrifft ein Verfahren zur Temperaturmessung und Widerstandsthermometer zur Durchführung des Verfahrens.

Bei den gängigen Temperaturmeßverfahren mit Widerstandsmeßfühlern wird die Temperatur anhand des Temperaturkoeffizienten des verwendeten Materials bestimmt, der z. B. bei Platin ca. 4*10E-3/°C beträgt. Das bedeutet, daß für eine Temperaturbestimmung auf 0.1° C der Widerstand des Sensors auf 10E-4 genau bestimmt werden muß.

Bei diesen hohen Anforderungen an die Genauigkeit ergibt sich das Problem, daß neben der Änderung des Widerstandes mit der Temperatur auch eine Widerstandsänderung aufgrund mechanischer Verformung erfolgt, wie das bei Dehnungsmeßstreifen zur Bestimmung von Längenänderungen ausgenutzt wird.

Rpg = Rp(T)*Rpm

Dabei bedeutet Rpg die gemessene Widerstand am Platinwiderstand, Rp(T) der von der Temperatur abhängige Teil des Paltinwiderstands, welcher im Idealfall ein Maß für die Temperatur darstellt und Rpm ein Parameter welcher die Änderung des Platinwiderstands allein durch mechanische Einflüsse (z.B. Druck, Längenänderung) beschreibt. Rpm wird bei den bisherigen Verfahren zur Temperaturbestimmung als 1 angenommen.

Kleine Änderungen in der Geometrie des Temperaturfühlers beeinflussen daher die gemessene Temperatur. Das ist insbesondere dann der Fall wenn der Widerstandsfühler zwecks besserer Wärmeankopplung fest mit dem Objekt verbunden ist, dessen Temperatur bestimmt werden soll, z.B. dann, wenn der Temperaturmeßfühler eingekittet ist. Dann kann es passieren, daß bei einer Erwärmung des Objektes der Temperaturfühler seine Position im Kitt nicht reproduzierbar verändert und somit plötzlich ganz anderen mechanischen Kräften ausgesetzt ist, was eine Veränderung des gemessenen Widerstandes (und damit auch der daraus abgeleiteten Temperatur) zu Folge hätte.

Eine Möglichkeit wäre es, den Widerstandsdraht im Meßfühler möglichst frei von mechanischen Spannungen aufzuhängen, wie das bei Präzisionsthermometern (z. B. Typ PWN der Fa. Heraeus) der Fall ist. Das bewirkt aber eine erhebliche Erhöhung des Wärmewiderstandes zum Meßobjekt, was neben einer stark verlängerten Ansprechzeit zudem aufgrund des Meßstromes eine erhöhte Eigenerwärmung und somit einen Verlust an Meßgenauigkeit zur Folge hätte.

Aufgabe der Erfindung ist es, ein Verfahren und eine Vorrichtung zur Verfügung zu stellen, bei dem die mechanischen Einflüsse auf den Meßwiderstand kompensiert werden können.

Diese Aufgabe wird durch den Patentansprüche 1 und 2 gelöst.

Die Unteransprüche beschreiben vorteilhafte Ausgestaltungen des Widerstandsthermometers.

Ein Vorteil der Erfindung liegt darin, daß im Temperaturmeßwiderstand neben dem Draht, mit dem anhand des Temperaturkoeffizienten die Temperatur bestimmt wird, ein zweiter Draht mit einen möglichst geringen Temperaturkoeffi-zienten, aber ähnlichen mechanischen Eigenschaften, hinzugefügt wird, mit dem die Widerstandsänderung des Temperaturmeßfühlers aufgrund mechanische Verformung erfaßt und damit im ersten Draht korrigiert werden kann.

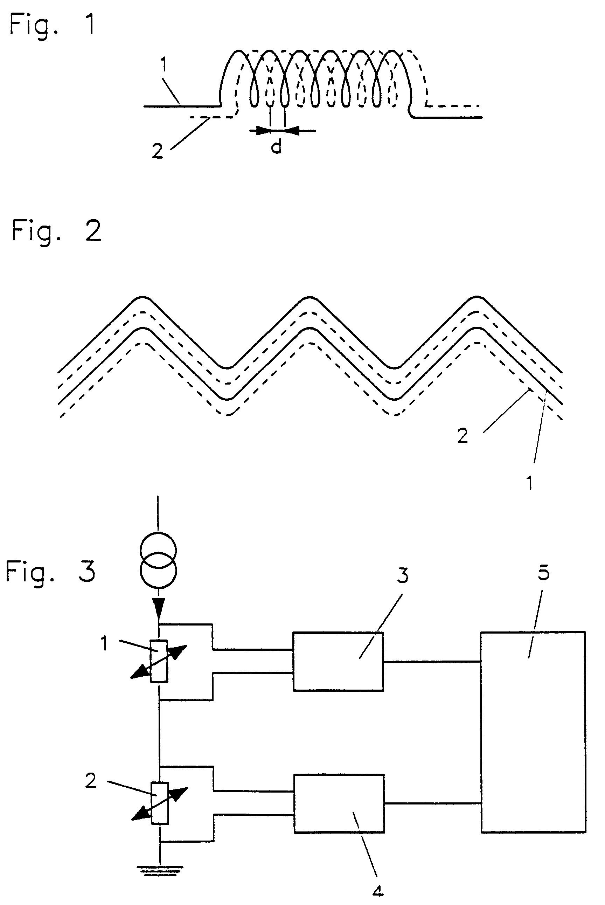

Die Erfindung wird im folgenden anhand zweier Ausführungsbeispiele mit Hilfe der Figuren 1 bis 3 näher erläutert.

Die Figuren 1 und 2 zeigen beispielhaft zwei geometrische Anordnungen von zwei verschiedenen Materialien. Die Figur 3 zeigt ein Blockschaltbild mit dem Sensor.

Im Beispiel von Figur 1 wird neben dem Draht für den Widerstandsmeßfühler wird ein zweiter Draht parallel gewickelt. Für die beiden Materialien wählt man zweckmäßigerweise Materialien, deren mechanischen Eigenschaften möglichst gleich, deren Temperaturkoeffizienten aber möglichst verschieden sein sollten.

Sind die mechanischen Eigenschaften sehr verschieden, so müssen diese über eine Kalibrierung aneinander angepaßt werden.

Aus folgender Tabelle ergibt sich, daß Platin und Konstantan die obigen Forderungen recht gut erfüllen:

| | Temp.koeff 1E-3/K | Spez. W. Ohm mm$^2$/m | E.Modul 1E10 N/m$^2$ | Poiss 1E5Kp/cm$^2$ |
|---|---|---|---|---|
| Platin | 3.9 | 0.107 | 17.0 | 0.39 |
| Konstantan | 0.003 | 0.50 | 16.3 | 0.33 |

Als Material 1 wird Platin und als Material 2 wird Konstantan verwendet.

Der Platindraht 1 und der Konstantandraht 2 werden so auf einen Dorn gewickelt, daß der Abstände d zwischen den Drähten gleich sind. Die beiden Drähte werden mit Anschlußdrähten versehen und mit einem geeigneten Material z.B. Glas oder Keramik vergossen, mit Keramik gesintert oder in Glas eingeschmolzen (hier nicht dargestellt). Die beiden Drähte sind somit den gleichen Kräften ausgesetzt, und erfahren im Idealfall auch die gleiche mechanisch Deformation.

Die Fig.2 zeigt vier mäanderförmig und parallel angeordnete Srukturen aus zwei verschiedenen Materialien 1 und 2. Auch bei dieser Anordnung sind die Strukturen entsprechend fixüiert.

Bei den jeweils doppelt vorhandenen Elementen kann so die Meßgenauigkeit durch Mittelwertbildung erhöht werden.

Fig. 3 zeigt die Beschaltung des Sensors. Durch die beiden Widerstände 1 und 2 fließt der selbe Meßstrom. Die an 1 und 2 abfallenden Spannungen UP und UK werden mit zwei Analog-Digitalwandlern 3 und 4 erfaßt und zum Mikroprozessor 5 geleitet, der die anfallenden Daten weiterverarbeitet.

Mit dieser Meßanordnung können durch die im folgenden beschriebene Verfahren die Temperaturen unabhängig von mechanischen Einflüssen bestimmt werden.

Die Widerstände $Rp0$ und $Rk0$ die den Materialien 1 und 2 entsprechen, werden bei einer Referenztemperatur $T0$ bestimmt und im Mikroprozessor abgespeichert.

Dann werden bei der Meßtemperatur T die Widerstände von Platin und Konstantan bestimmt. In erster Näherung wird die Änderung des Widertands vom Konstantan mit der Temperatur allein durch die Änderung der mechanischen Einflüsse bestimmt. Diese Änderung entspricht auch der Änderung des Platinwiderstandes aufgrund der mechanischen Einflüsse.

Somit kann die Änderung des Platinwiderstands allein aufgrund der Temperaturänderung bestimmt werden. Falls sich die Änderung der Widerstände aufgrund der mechanischen Einflüsse für die beiden Materialien stärker unterscheidet, muß dies durch eine gesonderte Berechnung korrigiert werden.

Falls mehr als zwei verschiedene Materialien für das Widerstandthermometer verwendet werden, lassen sich auch höhere Effekte korrigieren.

## Patentansprüche

1. Verfahren zur Temperaturmessung mit mindestens zwei Widerstandssensoren, welche einer mechanischen Verformung ausgesetzt sind, wobei die mechanischen Eigenschaften der Materialien der Widerstandssensoren möglichst gleich sind und ein Sensor einen möglichst hohen und ein anderer Sensor einen möglichst geringen Temperaturkoeffizienten besitzt, bestehend aus folgenden Verfahrensschritten:
   a) Bestimmen der Widerstandswerte der Sensoren bei einer Referenztemperatur,
   b) Bestimmen der Widerstandswerte der Sensoren bei der Meßtemperatur und
   c) Kompensation des Beitrages der Widerstandsänderung des Materials mit dem hohen Temperaturkoeffizienten, welcher durch die mechanische Belastung verursacht wird, durch die Widerstandsänderung des anderen Materials, welches in erster Näherung allein durch die Änderung der mechanischen Belastung verursacht wird.

2. Widerstandsthermometer zur Durchführung des Verfahrens gemäß Anspruch 1, bestehend aus mindestens zwei verschiedenen Matrialien mit unterschiedlichen Temperaturkoeffizienten.

3. Widerstandsthermometer nach Anspruch 2, dadurch gekennzeichnet, daß die verschiedenen Materialien geometrisch möglichst gleich angeordnet werden.

4. Widerstandsthermometer nach Anspruch 3, dadurch gekennzeichnet, daß die verschiedenen Materialien als parallele Doppelspirale angeordnet sind.

5. Widerstandsthermometer nach Anspruch 3, dadurch gekennzeichnet, daß die verschiedenen Materialien zueinander parallel angeordnet sind.

6. Widerstandsthermometer nach Anspruch 3, dadurch gekennzeichnet, daß die verschiedenen Materialien zueinander parallel und mäanderförmig auf einem ebenen Substrat angeordnet sind.

7. Widerstandsthermometer nach einem der Ansprüche 2 bis 5, dadurch gekennzeichnet, daß die verschiedenen Materialien möglichst gleiche mechanische Eigenschaften aufweisen.

8. Widerstandsthermometer nach einem der Ansprüche 2 bis 7, dadurch gekennzeichnet, daß die beiden Materialien Platin und Konstantan sind.

Fig. 1

Fig. 2

Fig. 3

Europäisches Patentamt

**EUROPÄISCHER RECHERCHENBERICHT**

Nummer der Anmeldung

EP 94 10 5680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | FR-A-2 367 280 (SCHLUMBERGER INDUSTRIE) 5. Mai 1978<br>* das ganze Dokument *<br>--- | 1,8 | G01K7/18 |
| A | DATABASE WPI<br>Week 8037,<br>Derwent Publications Ltd., London, GB;<br>AN 80-J0069C<br>& SU-A-712 691 (THERM TECHN) 30. Januar 1980<br>* Zusammenfassung *<br>--- | 1,8 | |
| A | NOUVEL AUTOMATISME,<br>Bd.28, Nr.33, Januar 1983, PARIS FR<br>Seiten 49 - 56<br>D. MANSION 'LE POINT SUR LES CAPTEURS'<br>* Seite 51 *<br>--- | 1 | |
| A | MESSEN + PRUFEN,<br>Nr.3, März 1982, BAD WORISHOFEN DE<br>Seiten 164 - 167<br>ANONYMOUS 'DUNNE SCHICHTEN FUR MESSGROSSENWANDLER'<br>* Seite 166 *<br>----- | 1 | **RECHERCHIERTE SACHGEBIETE (Int.Cl.5)**<br><br>G01K |

Der vorliegende Recherchenbericht wurde für alle Patentansprüche erstellt

| Recherchenort | Abschlußdatum der Recherche | Prüfer |
|---|---|---|
| DEN HAAG | 26. Juli 1994 | Ramboer, P |

EPO FORM 1503 03.82 (P04C03)